# EUROPÄISCHE PATENTSCHRIFT

(11) **EP 2 840 012 B1**
(45) Veröffentlichungstag und Bekanntmachung des Hinweises auf die Patenterteilung: **28.12.2016**
(21) Anmeldenummer: 14177430.7
(22) Anmeldetag: 17.07.2014
(51) Int. Cl.: B62D 5/00

(54) **Lenkanschlag**
Steering stop
Butée de direction

(30) Priorität: 23.08.2013 DE 102013014135
(43) Veröffentlichungstag der Anmeldung: 25.02.2015
(73) Patentinhaber: AUDI AG, 85045 Ingolstadt (DE)
(72) Erfinder: Nagl, Martin, 86643 Rennertshofen (DE); Pfeiffer, Ulrich, 85123 Karlskron / Probfeld (DE); Koch, Tilo, 85055 Ingolstadt (DE); Klinger, Thomas, 85057 Ingolstadt (DE); Satzke, Anne, 85051 Ingolstadt (DE)

(56) Entgegenhaltungen:
- EP-A1- 2 610 132
- WO-A1-03/010040
- WO-A1-2005/100130
- DE-A1- 10 307 567
- DE-A1-102004 044 940
- DE-A1-102008 045 195
- DE-A1-102009 053 226

## Beschreibung

Die Erfindung betrifft einen Lenkanschlag gemäß dem Oberbegriff des Anspruchs 1 zur Verwendung in Steer-by-Wire Lenkungen bei nicht-spurgebundenen Fahrzeugen und ein entsprechendes Verfahren.

Bei Steer-by-Wire-Lenkungen besteht keine direkte mechanische Kopplung zwischen dem Lenkrad und den gelenkten Rädern. Stattdessen wird über Sensoren der Lenkwinkel und/oder die Drehgeschwindigkeit des Lenkrads und/oder das aufgebrachte Drehmoment gemessen und über Aktoren werden die Räder entsprechend eingeschlagen.

Bei Steer-by-Wire Lenkungen entfällt somit die unmittelbare Rückmeldung zwischen der Lenkwinkeleingabe des Fahrers über das Lenkrad und dem tatsächlich ausgeführten Einschlagwinkel am Rad. Somit erhält der Fahrer keine Rückmeldung darüber, ob bei starkem Auslenken das Lenkgetriebe sich bereits im Anschlag befindet oder nicht. Bei einem frei durchdrehbaren Lenkrad lassen sich folglich unendlich große Lenkwinkel erzeugen, ohne dass das Lenkgetriebe diese auch einstellen kann. Derartige Anordnungen sind aus DE 10 2008 045 195 A1 oder DE 10 2009 053 226 A1 bekannt und bei ihnen wird über Mittel einer formschlüssigen Kraftübertragung ein Lenkanschlag simuliert.

Aus der gattungsgemässen DE 103 07 567 A1 ist eine Lenkvorrichtung mit einem eine Lenkkraft erzeugenden Lenkkraftsimulator bekannt, bei der in Abhängigkeit der Drehgeschwindigkeit der Lenkwelle oder in Abhängigkeit einer Winkellage eines zu lenkenden Rades mittels einer Konusreibkupplung auf die Lenkwelle wirkende Reibkräfte erhöht oder erniedrigt werden. Dies dient zur Simulation einer Lenkkraft während einer Lenkbewegung.

Die Aufgabe der vorliegenden Erfindung ist es, einen Lenkanschlag für den Steer-by-Wire-Einsatz bereitzustellen, bei dem der Anwender eine haptische Rückmeldung (Feedback) bei dem Erreichen des maximal möglichen Einschlags der Räder erhält. Insbesondere soll hierbei betrachtet werden, dass unter unterschiedlichen Fahrbedingungen unterschiedliche maximale Einschlagwinkel der Räder und unterschiedliche Übersetzungsverhältnisse von der Lenkradstellung zu dem Radeinschlag gefordert sein können.

Diese Aufgabe wird durch die Merkmale des Anspruchs 1 und das Verfahren gemäß Anspruch 10 gelöst. Vorteilhafte Weiterbildungen ergeben sich aus den Unteransprüchen.

Ein Lenkanschlag für ein Fahrzeug mit einem Steer-by-Wire-Lenksystem umfasst eine Lenkwelle zur Verbindung mit einer Lenkhandhabe, insbesondere einem Lenkrad, und einen ortsfest am Fahrzeug anordbaren Blockierträger und ein Blockierelement, welches über einen Antrieb in einen Spalt zwischen einer Blockierzone des Blockierträgers und einem mit der Lenkwelle gekoppelten Blockierbereich einführbar ist. Dabei ist das Blockierelement eingerichtet, in einer Blockierstellung über Reibkräfte zwischen dem Blockierelement einerseits und dem Blockierbereich und/oder der Blockierzone andererseits eine Drehbewegung der Lenkwelle relativ zu dem Blockierträger zu blockieren. Insbesondere wird es durch eine Steuerung ermöglicht, den Antrieb wahlweise zu aktivieren und so nach Bedarf das Drehen der Lenkwelle zu verhindern oder freizugeben. Dieser Bedarf besteht insbesondere beim Erreichen von virtuellen Endlagen des Lenkrads, um dem Fahrer zu signalisieren, dass die Räder maximal eingeschlagen sind oder bei einer Parkstellung, bei der das komplette Blockieren des Lenkrads zur Simulation eines Lenkradschlosses gefordert ist.

Bei einer Steer-by-Wire Lenkung besteht von der Lenkwelle keine mechanische oder hydraulische Kopplung über Getriebestufen oder dergleichen zu mechanischen Komponenten der Einstellung des Radeinschlagwinkels wie beispielsweise einer Spurstange. Vielmehr wird das Drehen der Lenkwelle in ein elektronisches Signal gewandelt und über dieses Signal wird die Einstellung des Radeinschlags veranlasst.

Insbesondere ist für das Blockierelement eine Bewegungsrichtung vorgesehen, die im Wesentlichen der Achsrichtung der Lenkwelle entspricht. Wenn an dem Blockierelement die nachfolgend näher erläuterte Konizität vorhanden ist, so wird der Begriff "im Wesentlichen der Achsrichtung entsprechend" als "innerhalb des Konizitätswinkels liegend" verstanden. Da die Bewegungsrichtung des Blockierelements in einer anderen Richtung als der Kraftrichtung des Blockierens liegt, kann der Antrieb des Blockierelements gering dimensioniert werden. Diese Richtungen sind insbesondere senkrecht zueinander. Konkret werden durch die Bewegung des Blockierelements in axialer Richtung der Lenkwelle mit nachfolgendem blockierenden Eingriff tangentiale Kräfte der Lenkwellendrehung in Radialkräfte gewandelt und diese Radialkräfte bewirken über die Reibkräfte tangentiale Kräfte, die einer weiteren Drehung der Lenkwelle entgegen wirken.

Bevorzugt umfassen der Blockierbereich der Lenkwelle und die Blockierzone des Blockierträgers jeweils einen zylindrischen und/oder einen konischen Abschnitt. Hierdurch kann bei Kontakt mit dem Blockierelement ein Linienkontakt bewirkt werden.

Insbesondere weisen der Blockierbereich der Lenkwelle und die Blockierzone des Blockierelements konische Abschnitte auf und ein Konizitätswinkel β des Blockierelements entspricht der Summe der Konizitätswinkel γ, δ des Blockierbereichs der Lenkwelle und der Blockierzone des Blockierträgers, da auf diese Weise jeweils Linienkontakte der in Kontakt stehenden Komponenten erzielbar ist. Die Konizität des Blockierelements, d. h. der Konizitätswinkel β beträgt in keinem Fall mehr als 45°, bevorzugt beträgt er höchstens 30° und liegt insbesondere unter 20°.

Weiter kann bevorzugt das Blockierelement einen ovalen Querschnitt aufweisen und kann insbesondere an allen Querschnitten, die zum Eingriff mit der Lenkwelle und dem Blockierträger bestimmt sind, einen ovalen Querschnitt aufweisen. Oval kann insbesondere im Rahmen dieser Erfindung umfassen, dass ein eckenfreier Querschnitt vorliegt, bei dem zwei Durchmesser, die durch den Mittelpunkt des Querschnitts verlaufen und senkrecht zueinander sind, unterschiedliche Maße aufweisen. Hierdurch ergibt sich eine Geometrie, die abhängig von ihrem Verdrehwinkel, eine unterschiedliche radiale Ausdehnung (in Bezug auf die Lenkwellenradialrichtung) aufweist und die aufgrund der Verdrehung Blockierkräfte aufnehmen kann.

Insbesondere ist ein Einführwinkel als die Verdrehung von dem längsten Querschnittsdurchmesser des ovalen Blockierelements gegenüber der Tangentialrichtung des Spalts zwischen der Lenkwelle und dem Blockierträger definiert und der Lenkanschlag ist eingerichtet, das Blockierelement zur Erzeugung der Blockierwirkung in den Spalt mit dem Einführwinkel α von mindestens 3° und bevorzugt mindestens 10° einzuführen. Aufgrund dieser leicht verdrehten Lage beim Einführen wird die Blockierwirkung bei einer entgegengesetzten Drehrichtung bereits dann geöffnet, wenn das Blockierelement von seiner Blockierwinkellage, die z.B. bei 20° liegen kann, auf die Winkellage beim Einführen zurückgedreht wird. Wenn das Blockierelement also auf den Einführwinkel α zurückgedreht wurde, so besteht keine Blockierwirkung mehr, was bedeutet, dass das Blockierelement bei betragsmäßig kleineren Winkellagen einfach aus dem Abstand bzw. Spalt gezogen werden kann. Wenn diese Einführverdrehung nicht gegeben wäre, so könnte das Blockierelement bei einer öffnenden Drehbewegung eventuell unmittelbar in eine entgegengesetzte Blockierlage mit einer negativen Einführwinkellage kommen.

Weiter kann das Blockierelement eingerichtet sein, aufgrund von einem Drehmoment der Lenkwelle bei einem Blockieren der Drehung Radialkräfte in dem Blockierelement aufzubauen, die einem Haltemoment entsprechen, welches größer als das Drehmoment an der Lenkwelle ist. Das Haltemoment ergibt sich über die Reibkraft R nach der Formel R= μ* N. Dabei ist N eine radiale Blockierkraft, μ ist die Reibkonstante und aus der Reibkraft R ergibt sich das Haltemoment mit dem Radius der Lenkwelle als Hebelarm. Dieses Haltemoment ist aufgrund der Kraftübersetzung größer als das Drehmoment, das der Fahrer auf das Lenkrad aufgebracht hat. Hierdurch kann der Lenkanschlag in jedem Fall sicher eingehalten werden.

Insbesondere ist bevorzugt eine Mehrzahl von die Lenkwelle umlaufend angeordneten Blockierelementen zeitgleich in den Spalt einführbar. Hierdurch wird eine Symmetrie der Kräfte auf die Lenkwelle erzielt, die eine einfachere und kostengünstigere Lagerung der Lenkwelle ermöglicht.

Bei einem Verfahren zur Bewirkung eines Lenkanschlags wird die Drehlage der Lenkwelle kontinuierlich oder wiederholt in kurzen Abständen gemessen und ein Blockierelement wird dann in einen Spalt zwischen der Lenkwelle und einem Blockierträger oder daran gekoppelten Komponenten eingeführt, wenn die Drehlage einen vorgegebenen zulässigen Maximalwert erreicht hat, um auf diese Weise einen Lenkanschlag zu generieren.

Bevorzugt wird dabei das von dem Fahrer auf die Lenkwelle aufgebrachte Drehmoment und/oder der Drehwinkel der Lenkwelle zu Zeiten, bei denen das Blockierelement in den Spalt eingeführt ist, kontinuierlich oder in vorgegebenen Zeitabständen gemessen und bei einem gegenüber dem Maximalwert verkleinertem Drehwinkel der Lenkwelle und/oder einem Drehmoment der Lenkwelle, welches in Richtung der Verkleinerung des Drehwinkels der Lenkwelle wirkt, wird eine Zugkraft auf das Blockierelement ausgeübt, um das Blockierelement aus dem Spalt zu ziehen.

Nachfolgend werden bevorzugte Ausführungsformen anhand der Figuren beschrieben. Dabei zeigt:
- Fig. 1: einen schematischen Aufbau des Lenkanschlags zusammen mit dem Bereich der angelenkten Räder eines nicht-spurgebundenes Fahrzeugs,
- Fig. 2: den Schnitt A-A durch die Lenkwelle mit dem Blockierelement,
- Fig. 3: die Lage des Blockierelements gegen Ende der Einführbewegung und vor der sich ergebenden Blockierung,
- Fig. 4: das in den Spalt eingeführte und ihn blockierende Blockierelement und
- Fig. 5: eine alternative Ausführungsform der Erfindung.

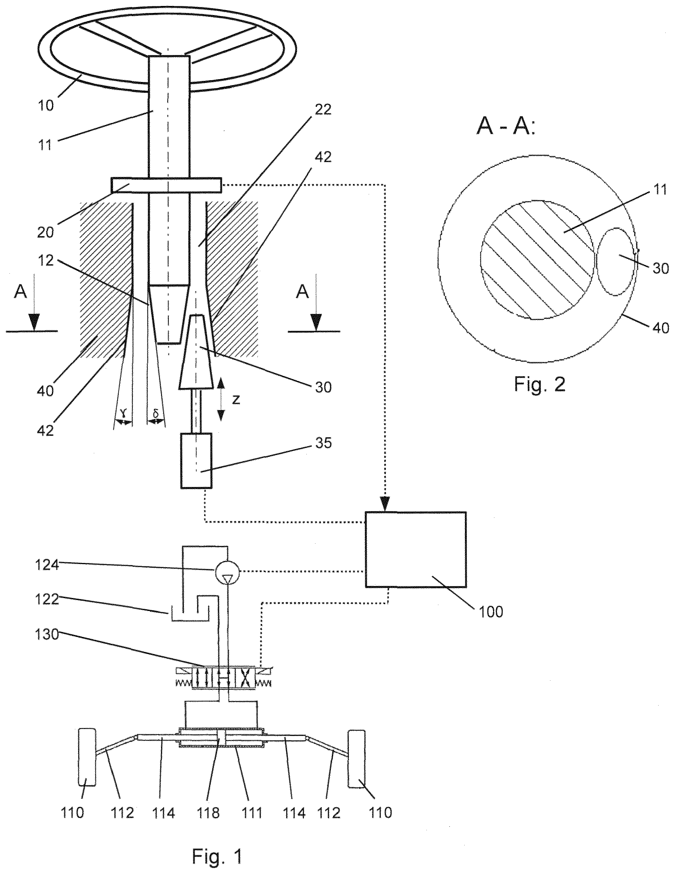

Fig. 1 zeigt eine Lenkhandhabe 10, oder spezieller ein Lenkrad 10, welche mit einer Lenkwelle 11 verbunden ist. Die Lenkwelle 11 ist umlaufend mit einem Blockierträger 40 versehen. Der Blockierträger 40 kann die Lenkwelle 11 komplett bis zum Lenkrad 10 umgeben oder alternativ kann er nur bereichsweise vorgesehen sein. Dabei ist er insbesondere zumindest abschnittsweise umlaufend geschlossen und mit einer hohen Steifigkeit ausgestattet.

Eine gewünschte Blockierfunktion wird maßgeblich durch ein Blockierelement 30 erzeugt. Das Blockierelement 30 hat einen ovalen Querschnitt. Es kann dabei über seine Axialerstreckung den gleichen Querschnitt aufweisen oder sich über seine Axialerstreckung verjüngen. Die Axialrichtung des Blockierelements 30 entspricht bevorzugt der Axialrichtung der Lenkwelle 11 und ist zu ihr parallel versetzt. Das Blockierelement 30 wird über einen automatischen Antrieb 35 in seiner Axialrichtung z, welche der Axialrichtung der Lenkwelle 11 entspricht, angetrieben und ist so in dieser Richtung automatisiert verschiebbar.

Die Lenkwelle 11 umfasst einen Blockierbereich 12, mit dem das Blockierelement 30 in Eingriff bringbar ist. Der Blockierbereich 12 kann Teil der Lenkwelle 11 sein oder Teil eines an der Lenkwelle 11 befestigten Rings oder eines anderen z.B. angeflanschten Anbauteils sein oder es kann auch ein über z.B. ein Kardangelenk drehsteif zu der Lenkwelle 11 gelagertes Teil sein. Bei der Darstellung gemäß Fig. 1 liegt der Blockierbereich 12 an dem dem Lenkrad 10 entgegengesetzten Ende der Lenkwelle 11. Er kann auch an einem radial vorstehenden und umlaufenden Flansch angeordnet sein. Der Blockierbereich 12 ist im Winkel δ von ca. 15° derart mit einer Fase versehen, dass der Durchmesser in Richtung zu dem Blockierelement 30 abnimmt. In bevorzugten Ausführungsformen beträgt der Winkel δ der Fase mindestens 3° bevorzugt mindestens 10°. Höchstens beträgt der Winkel δ 35° und bevorzugt höchstens 20°.

Der Blockierträger 40 ist aus einem Werkstoff ausreichender Festigkeit gefertigt. Er kann als ein Gehäuse ausgeführt sein, welches die Lenkwelle 11 umgibt. Er kann bspw. aus einem (Aluminium-)Druckguss oder einem Kunststoff gefertigt sein, der ausreichend faserverstärkt ist. Dabei muss seine Festigkeit nicht über die gesamte Länge der Lenkwelle 11 identisch ausgeführt sein, sondern Bereiche erhöhter Festigkeit werden vor allem umlaufend im Bereich einer Blockierzone 42 benötigt. Die Blockierzone 42 kann mit einer Fase des Winkels γ versehen sein, der dem Winkel δ des Blockierbereichs 12 der Lenkwelle 11 entspricht und der sich in der Richtung zu dem Blockierelement 30 weitet.

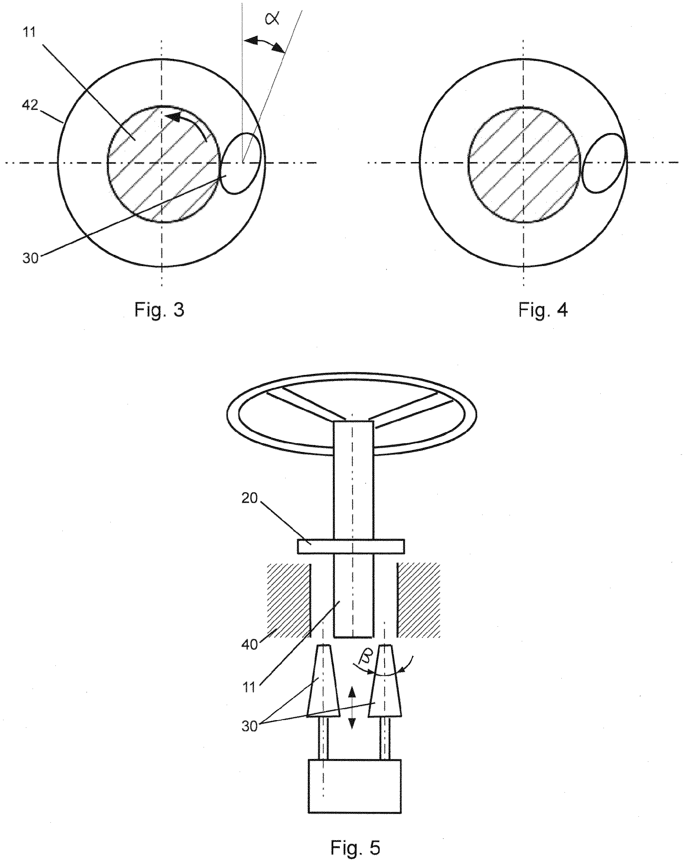

Das Blockierelement 30 ist konisch ausgeführt, wobei sein Konizitätswinkel β (siehe Fig. 5) der Summe des Winkels δ des Blockierbereichs 12 und des Winkels γ der Blockierzone 42 entspricht. Wenn das Blockierelement 30 gemäß Fig. 1 von unten in einen Spalt 22 zwischen der Lenkwelle 11 und dem Blockierträger 40 geschoben wird, so entsteht dadurch jeweils ein Linienkontakt von dem Blockierelement 30 mit dem Blockierbereich 12 und der Blockierzone 42.

Der Antrieb 35 des Bockierelements 30 kann einen Stellmotor oder einen Elektromagneten umfassen. Der Antrieb 35 ist ortsfest am Fahrzeug oder dem Blockierträger 40 gelagert. Das Blockierelement 30 ist an dem Stellantrieb 35 drehbar um seine Axialachse z gelagert. Zusätzlich kann eine elastische Federung der Lagerung in dieser axialen Richtung vorgesehen sein. Der Bewegungsweg umfasst eine rückgezogene Stellung, bzw. Freigabestellung, bei der das Blockierelement 30 derart aus dem Spalt 22 zwischen der Lenkwelle 11 und dem Blockierträger 40 gezogen ist, dass kein Kontakt von dem Blockierelement 30 mit der Lenkwelle 11 oder mit dem Blockierträger 40 oder mit beiden auftreten kann. Ferner ist für das Blockierelement 30 eine Blockierstellung vorgesehen.

Es kann gemäß Fig. 1 ein Lenkgetriebe vorgesehen sein, das ein Hydrauliksystem zur Einstellung der Radeinschläge der Räder 110 umfasst. Bei alternativen Ausführungsformen kann bspw. ein Elektroantrieb verwendet werden. Im Hydrauliksystem ist eine Hydraulikpumpe 124 vorgesehen und ein Dreiwegesteuerventil 130, welches von einer elektronischen Steuerung 100 ansteuerbar ist, so dass ein Hydraulikfluid in einen Lenkzylinder 111 gelangen kann. So kann ein Lenkkolben 118 wahlweise innerhalb des Lenkzylinders 111 in beide Richtungen verschoben werden. Der Lenkkolben 118 ist beidseitig mit jeweils einer Kolbenstange 114 verbunden, an deren Enden eine Spurstange 112 angekoppelt ist, die jeweils mit dem entsprechenden Rad 110 verbunden ist. So kann über die Position des Lenkkolbens 118 der Lenkwinkel bzw. der Radeinschlagswinkel der Räder 110 eingestellt werden. Wenn ein Einschlag der Räder 110 nach links gewünscht ist, so schaltet die Steuerung 100 ein Dreiwegesteuerventil 130 in die Schaltstellung, die in Fig. 1 links gezeigt ist und bei der das Fluid von der Pumpe 124 in die rechte Kammer des Lenkzylinders 111 gelangt und so den Radeinschlag bewirkt. Um einen entgegen gesetzten Radeinschlag zu erhalten, wird das Steuerventil 130 in die entgegen gesetzte Schaltstellung gebracht und das Fluid wird in die linke Kammer des Lenkzylinders 111 gepumpt.

Figur 2 zeigt einen Schnitt A-A der Fig. 1, bei dem das Blockierelement 30 mit seinem längeren Durchmesser tangential zu dem Abstand bzw. Spalt 22 ausgerichtet ist.

Beim normalen Fahrbetrieb ist das Blockierelement 30 derart sicher von dem Blockierbereich 12 und der Blockierzone 42 entfernt, dass kein Kontakt stattfinden kann. Beim Fahrbetrieb wird der Winkel des Lenkrads 10 von einem kombinierten Drehmoment- und Drehwinkelsensor 20 gemessen. Aufgrund des Messergebnisses wird der Lenkzylinder 111 angesteuert und der Radlenkwinkel eingestellt. Zur Erreichung der Blockierstellung wird das Blockierelement 30 so tief in den zulaufenden Spalt 22 (siehe Fig. 1) geschoben, bis ein Kontakt von dem Blockierelement 30 zu dem Blockierbereich 12 der Lenkwelle 11 auftritt.

Bei der vorliegenden beispielhaften Ausführungsform der Erfindung beträgt das Lenkeinschlags-/Radeinschlagsverhältnis 2,5 zu 1. Das heißt, bei einem Drehwinkel des Lenkrads 10 von der Mittelstellung ausgehend von +900° in die eine Richtung kann der eine Lenkeinschlag erreicht werden und von -900° in die andere Richtung der andere Lenkeinschlag. Der Drehmoment- und Drehwinkelsensor 20 misst die jeweilige Stellung des Lenkrads 10 und gibt das Ergebnis an die Steuerung 100.

Sobald der detektierte Winkel der Lenkraddrehung, also der Lenkeinschlag + 900° oder - 900° beträgt, wird über die Steuerung 100 der Stellantrieb 35 aktiviert und das Blockierelement 30 wird in den Spalt 22 gefahren. Dabei wird das Blockierelement 30 leicht verdreht eingeführt. Wenn die kürzere Querschnittsachse in radialer Richtung der Lenkwelle 11 liegt, so wird dies definiert als ein Einführwinkel α von 0°. Gegenüber diesem 0°-Einführwinkel, wird das Blockierelement 30 mit einer Verdrehung von bspw. α = 8° eingeführt. Fig. 3 zeigt diesen Zustand zum Zeitpunkt des ersten Kontakts von dem Blockierelement 30 mit der Lenkwelle 11. Beim vorliegenden Fall des Drehens der Lenkwelle 11 gegen den Uhrzeigersinn (siehe Pfeil der Fig.3) kommt ein positiver Einführwinkel α zur Verwendung. Aufgrund der Reibkräfte zwischen der Lenkwelle 11 und dem Blockierelement 30 wird das Blockierelement 30 so lange in Richtung eines größeren Winkels α gedreht, bis es mit dem Innendurchmesser der Blockierzone 42 in Kontakt kommt. Bei einem weiteren Drehen der Lenkwelle 11 in der gleichen Richtung erhöht sich die sich ergebende und im Wesentlichen radial wirkende Normalkraft N. Die Reibkraft R ergibt sich aus R = μ *N, wobei μ die Reibkonstante der gegebenen Materialpaarung ist. Die Reibkraft R ist ein Maß für das sich ergebende Blockierdrehmoment. Auf diese Weise wird das Weiterdrehen der Lenkwelle 11 in die gezeigte Richtung (Fig. 3) verhindert.

In dem Zustand, dass die Blockierung besteht, wird über den kombinierten Drehmoment- und Drehwinkelsensor 20 das am Lenkrad 10 aufgebrachte Drehmoment und ggf. eine Drehung in die entgegengesetzte Richtung erkannt. Sobald das Drehmoment eine vorgegebene Schwelle unterschreitet, so wird von der Steuerung 100 der Stellantrieb 35 derart aktiviert, dass das Blockierelement 30 aus dem Abstand, bzw. Spalt 22 gezogen wird. Zusätzlich und/oder alternativ kann die genannte Aktivierung des Stellantriebs 35 in Abhängigkeit von dem Drehwinkel der Lenkwelle 11 veranlasst werden.

Nachdem das Blockierelement 30 komplett oder zumindest ausreichend weit aus dem Spalt 22 entfernt wurde, wird die Lenkung in der normalen Betriebsweise, also ohne den Einsatz des Blockierelements 30, verwendet.

Situationsabhängig kann ein anderes Lenkeinschlags-/Radeinschlagsverhältnis gewünscht sein. Beispielsweise kann das Fahrzeug über ein sportliches Fahrprogramm verfügen. Bei einer sportlichen Fahrweise soll die Lenkung auf Lenkeinschläge empfindlicher reagieren. So kann hierfür ein Lenkeinschlag von jeweils 1,5 Umdrehungen, also +/-540° dem maximalen Radeinschlag entsprechen. Bei einem Fahrprogramm für Geländefahrten kann ein veränderter maximaler Radeinschlag vorgegeben sein. Auch kann bei Rädern 110 mit veränderten Durchmessern, (wie z.B. Sommer- oder Winterreifen) ein veränderter maximaler Radeinschlagwinkel vorgegeben sein. Des Weiteren kann geschwindigkeitsabhängig von der Fahrzeugsteuerung ein maximal zulässiger Radeinschlag vorgegeben werden. Auch in diesen Fällen ist gewünscht, dass der Fahrer eine veränderte Rückmeldung über den maximalen Lenkeinschlag des Lenkrads 10 erhält.

In diesen Fällen kann die Steuerung 100 bereits bei kleineren durch den Drehmoment-und Drehwinkelsensor 20 gemessenen Lenkeinschlägen das Blockierelement 30 in die Arbeits-, also die Blockierposition bringen, um so einen veränderten Anschlag und somit einen veränderten maximalen Lenkeinschlag zu generieren.

Wenn das Fahrzeug ausgeschaltet wird, so kann eine Lenkradsperre dadurch realisiert werden, dass das Blockierelement 30 komplett in den Spalt 22 gefahren wird. Dadurch wird der maximal mögliche Drehwert des Lenkrads 11 auf den Bereich positiver und negativer Werte des Einführwinkels α begrenzt. Bevorzugt kann der Einführwinkel α 0° betragen, um so den Drehbereich des Lenkrads 10 zu minimieren.

In Fig. 5 ist eine alternative Ausführungsform gezeigt, bei der das ovale Blockierelement 30 wie bereits beschrieben mit einem Kegelstumpf ausgeführt ist. Dabei sind die entsprechenden Kontaktflächen der Lenkwelle 11 und des Blockierträgers 40 zylindrisch. Dadurch ergibt sich zwar eine höhere Flächenpressung auf den Kegelstumpf, aber diese Ausführungsform kann vorteilhaft sein, um eine Drehung der Lenkwelle 11 verbessert auf das Blockierelement 30 zu übertragen und um so das Blockieren besser zu bewirken. Fig. 5 zeigt ferner eine Variante mit zwei Blockierelementen. Deren Anzahl kann auch höher sein und sie sind bevorzugt gleichmäßig um die Lenkwelle 11 umlaufend angeordnet, so dass sich ihre radialen Kräfte auf die Lenkwelle 11 gegenseitig aufheben.

Merkmale unterschiedlicher Ausführungsformen sind frei miteinander kombinierbar.

### Bezugszeichen:

- 10: Lenkhandhabe, insbesondere Lenkrad
- 11: Lenkwelle
- 12: Blockierbereich, insbesondere Fase
- 20: kombinierter Drehmoment-und Drehwinkelsensor
- 22: Abstand, Spalt
- 30: Blockierelement
- 35: Antrieb, Stellantrieb
- 40: Blockierträger, insbesondere Gehäuse
- 42: Blockierzone, insbesondere Fase
- 100: Steuerung
- 110: Rad
- 111: Lenkzylinder
- 112: Spurstange
- 114: Kolbenstange
- 118: Lenkkolben
- 124: Hydraulikpumpe
- 130: Dreiwegesteuerventil
- z: Axialrichtung

- α: Einführwinkel
- β: Konizitätswinkel des Blockierelements
- γ: Konizitätswinkel der Blockierzone
- δ: Konizitätswinkel der Lenkwelle
- μ: Reibkonstante
- R: Reibkraft
- N: radiale Blockierkraft

## Patentansprüche

1. Lenkanschlag für ein Fahrzeug mit einem Steer-by-Wire-Lenksystem, mit einer Lenkwelle (11) zur Verbindung mit einer Lenkhandhabe (10), insbesondere einem Lenkrad, und einem ortsfest am Fahrzeug anordbaren Blockierträger (40) und einem Blockierelement (30), **dadurch gekennzeichnet, dass** das Blockierelement (30) über einen Antrieb (35) in einen Spalt (22) zwischen einer Blockierzone (42) des Blockierträger (40) und einem mit der Lenkwelle (11) gekoppelten Blockierbereich (12) einführbar ist,
wobei
das Blockierelement (30) eingerichtet ist, in einer Blockierstellung über Reibkräfte zwischen dem Blockierelement (30) und dem Blockierbereich (12) und über Reibkräfte von dem Blockierelement (30) und der Blockierzone (42) eine Drehbewegung der Lenkwelle (11) relativ zu dem Blockierträger (40) zu blockieren.

2. Lenkanschlag gemäß Anspruch 1, **dadurch gekennzeichnet, dass** für das Blockierelement (30) ein Antrieb (35) mit einer Antriebsrichtung (z) vorgesehen ist, die im Wesentlichen der Achsrichtung der Lenkwelle (11) entspricht.

3. Lenkanschlag gemäß Anspruch 1 oder 2,
**dadurch gekennzeichnet, dass**
der Blockierbereich (12) der Lenkwelle (10) und die Blockierzone (42) des Blockierträgers (40) zylindrische und/oder konische Abschnitte umfassen, und das Blockierelement (30) eingerichtet ist, über radiale Kräfte des Verspannens ein Blockieren der Drehung der Lenkwelle (11) zu erzielen.

4. Lenkanschlag gemäß einem der vorangegangenen Ansprüche, **dadurch gekennzeichnet, dass**
das Blockierelement (30) derart in den Abstand (22) zwischen dem Blockierbereich (12) und der Blockierzone (42) einführbar ist, dass eine Drehung der Lenkwelle (11) in eine erste Richtung blockierkrafterhöhend und in einer der ersten Richtung entgegengesetzen Richtung blockierkraftsreduzierend wirkt.

5. Lenkanschlag gemäß einem der vorangegangenen Ansprüche, **dadurch gekennzeichnet, dass**
der Blockierbereich (12) der Lenkwelle (10) und/oder die Blockierzone (42) des Blockierträgers (40) konische Abschnitte aufweisen und dass ein Konizitätswinkel (β) des Blockierelements (30) der Summe der Konizitätswinkel (γ,δ) des Blockierbereichs (12) der Lenkwelle (11) und der Blockierzone (42) des Blockierträgers (40) entspricht.

6. Lenkanschlag gemäß einem der vorangegangenen Ansprüche, **dadurch gekennzeichnet, dass**
das Blockierelement (30) einen ovalen Querschnitt umfasst und insbesondere in seiner axialen Richtung an allen Querschnitten, die zum Eingriff mit der Lenkwelle (11) und dem Blockierträger (40) bestimmt sind, einen ovalen Querschnitt aufweist.

7. Lenkanschlag gemäß Anspruch 6,
**dadurch gekennzeichnet, dass**
ein Einführwinkel (α) definiert ist, als die Verdrehung von dem längsten Querschnittsdurchmesser des ovalen Blockierelements (30) zu der Tangentialrichtung eines Spalts (22) zwischen dem Blockierbereich (12) und der Blockierzone (42) und der Lenkanschlag eingerichtet ist, das Blockierelement (30) zur Erzeugung der Blockierwirkung in den Spalt mit einem Einführwinkel (α) von mindestens 3° und bevorzugt mindestens 6° einzuführen.

8. Lenkanschlag gemäß einem der vorangegangenen Ansprüche, **dadurch gekennzeichnet, dass**
das Blockierelement (30) eingerichtet ist, aufgrund von einem Drehmoment der Lenkwelle (11) bei einem Blockieren der Drehung Radialkräfte in dem Blockierelement (30) aufzubauen, die einem Haltemoment entsprechen, welches größer ist, als das verursachende Drehmoment an der Lenkwelle (30).

9. Lenkanschlag gemäß einem der vorangegangenen Ansprüche, **dadurch gekennzeichnet, dass**
eine Mehrzahl von die Lenkwelle (11) umlaufend angeordneten Blockierelementen (30) zeitgleich in den Spalt (22) einführbar ist.

10. Verfahren zum Betreiben eines Lenkanschlags nach einem der Ansprüche 1 bis 9, **dadurch gekennzeichnet, dass**
die Drehlage der Lenkwelle (11) kontinuierlich oder wiederholt in kurzen Abständen gemessen wird und ein Blockierelement (30) dann in einen Spalt (22) zwischen der Lenkwelle (11) und einen Blockierträger (40) oder daran gekoppelten Komponenten eingeführt wird, wenn die Drehlage einen vorgegebenen zulässigen Maximalwert erreicht hat und wobei der Lenkanschlag über Reibkräfte verursacht wird.

11. Verfahren gemäß Anspruch 10,
**dadurch gekennzeichnet, dass**
das von dem Fahrer auf die Lenkwelle (11) aufgebrachte Drehmoment und/oder der Verdrehwinkel der Lenkwelle (11) zu Zeiten, bei denen das Blockierelement (30) in den Spalt (22) eingeführt ist, kontinuierlich oder in vorgegebenen Zeitabständen gemessen wird und bei einem gegenüber einem Maximalwert verkleinertem Verdrehwinkel der Lenkwelle (11) und/oder einem Drehmoment, welches in Richtung der Verkleinerung der Drehwinkel der Lenkwelle (11) wirkt, eine Zugkraft auf das Blockierelement (30) ausgeübt wird, um das Blockierelement (30) aus dem Spalt (22) zu ziehen.

## Claims

1. Steering stop for a vehicle with a steer-by-wire steering system, with a steering shaft (11) for connection to a steering handle (10), in particular a steering wheel, and a locking carrier (40) that can be fixedly arranged on the vehicle and a locking element (30), **characterised in that** the locking element (30) can be inserted via a drive (35) into a gap (22) between a locking zone (42) of the locking carrier (40) and a locking region (12) coupled to the steering shaft (11), wherein the locking element (30) is arranged to lock in a locking position a rotational movement of the steering shaft (11) relative to the locking carrier (40) via friction forces between the locking element (30) and the locking region (12) and via friction forces from the locking element (30) and the locking zone (42).

2. Steering stop according to Claim 1, **characterised in that** for the locking element (30) a drive (35) with a drive direction (z) is provided, which substantially corresponds to the axial direction of the steering shaft (11).

3. Steering stop according to Claim 1 or 2, **characterised in that** the locking region (12) of the steering shaft (10) and the locking zone (42) of the locking carrier (40) include cylindrical and/or conical sections, and the locking element (30) is arranged to achieve a locking of the rotation of the locking shaft (11) via radial forces produced by the tensioning.

4. Steering stop according to any one of the preceding claims, **characterised in that** locking element (30) can be inserted into the space (22) between the locking region (12) and the locking zone (42) so that a rotation of the steering shaft (11) in a first direction has the effect of increasing the locking and in a direction opposite to the first direction has the effect of reducing the locking.

5. Steering stop according to any one of the preceding claims, **characterised in that** the locking region (12) of the steering shaft (10) and/or the locking zone (42) of the locking carrier (40) have conical sections and that a conicity angle (β) of the locking element (30) corresponds to the sum of the conicity angles (γ,δ) of the locking region (12) of the steering shaft (11) and of the locking zone (42) of the locking carrier (40).

6. Steering stop according to any one of the claims, **characterised in that** the locking element (30) includes an oval cross-section, and in particular in its axial direction has an oval cross-section in all cross-sections that are intended to engage with the steering shaft (11) and the locking carrier (40).

7. Steering stop according to Claim 6, **characterised in that** an insertion angle (α) is defined as the rotation from the longest cross-sectional diameter of the oval locking element (30) to the tangential direction of a gap (22) between the locking region (12) and the locking zone (42), and the steering stop is arranged to insert the locking element (30) for generating the locking action into the gap with an insertion angle (α) of at least 3° and preferably at least 6°.

8. Steering stop according to any one of the preceding claims, **characterised in that** the locking element (30) is arranged, on the basis of a torque of the steering shaft (11) with a locking of the rotation, to generate radial forces in the locking element (30) that correspond to a holding moment that is greater than the generating torque on the steering shaft (30).

9. Steering stop according to any one of the preceding claims, **characterised in that** a plurality of locking elements (30) arranged surrounding the steering shaft (11) can be inserted simultaneously into the gap (22).

10. Method for operating a steering stop according to any one of Claims 1 to 9, **characterised in that** the rotational position of the steering shaft (11) is continuously or repeatedly measured in short distances and a locking element (30) is then inserted into a gap (22) between the steering shaft (11) and a locking carrier (40) or components coupled thereto, if the rotational position has reached a predetermined allowable maximum value and wherein the steering stop is generated via frictional forces.

11. Method according to Claim 10, **characterised in that** the torque applied by the driver to the steering shaft (11) and/or the rotation angle of the steering shaft (11) at times at which the locking element (30) is inserted into the gap (22) is measured continuously or at predetermined time intervals and with a reduced rotation angle of the steering shaft (11) compared to a maximum value and/or a torque that acts in the direction of reducing the rotation angle of the steering shaft (11), cause a tractive force to be exerted on the locking element (30) in order to withdraw the locking element (30) from the gap (22).

## Revendications

1. Butée de direction pour un véhicule avec un système de direction à commande électrique, avec un arbre de direction (11) pour la liaison avec une manette de direction (10), en particulier avec un volant de direction, et avec un support de blocage (40) pouvant être agencé de manière solidaire sur le véhicule et avec un élément de blocage (30), **caractérisée en ce que** l'élément de blocage (30) peut être introduit par l'intermédiaire d'un dispositif d'entraînement (35) dans une fente (22) entre une section de blocage (42) du support de blocage (40) et une zone de blocage (12) couplée à l'arbre de direction (11), dans laquelle l'élément de blocage (30) est conçu pour, dans une position de blocage, bloquer un mouvement de rotation de l'arbre de direction (11) par rapport au support de blocage (40) par l'intermédiaire de forces de frottement entre l'élément de blocage (30) et la zone de blocage (12) et par l'intermédiaire de forces de frottement de l'élément de blocage (30) et de la section de blocage (42).

2. Butée de direction selon la revendication 1, **caractérisée en ce que,** pour l'élément de blocage (30), il est prévu un dispositif d'entraînement (35) avec une direction d'entraînement (z) qui correspond sensiblement à la direction axiale de l'arbre de direction (11).

3. Butée de direction selon la revendication 1 ou 2,
**caractérisée en ce que**
la zone de blocage (12) de l'arbre de direction (10) et la section de blocage (42) du support de blocage (40) comprennent des parties cylindriques et/ou coniques, et l'élément de blocage (30) est conçu pour obtenir un blocage de la rotation de l'arbre de direction (11) par l'intermédiaire de forces radiales du serrage.

4. Butée de direction selon l'une des revendications précédentes,
**caractérisée en ce que**
l'élément de blocage (30) peut être introduit de telle sorte dans l'espace (22) entre la zone de blocage (12) et la section de blocage (42) qu'une rotation de l'arbre de direction (11) dans une première direction agisse de manière à augmenter les forces de blocage et qu'une rotation de l'arbre de direction dans une direction opposée à la première direction agisse de manière à diminuer les forces de blocage.

5. Butée de direction selon l'une des revendications précédentes,
**caractérisée en ce que**
la zone de blocage (12) de l'arbre de direction (10) et/ou la section de blocage (42) du support de blocage (40) comportent des parties coniques et **en ce qu'**un angle de conicité (β) de l'élément de blocage (30) correspond à la somme des angles de conicité (γ, δ) de la zone de blocage (12) de l'arbre de direction (11) et de la section de blocage (42) du support de blocage (40).

6. Butée de direction selon l'une des revendications précédentes,
**caractérisée en ce que**
l'élément de blocage (30) comprend une section transversale ovale et comporte, en particulier dans sa direction axiale sur toutes les sections transversales qui sont déterminées pour la mise en prise avec l'arbre de direction (11) et le support de blocage (40), une section transversale ovale.

7. Butée de direction selon la revendication 6,
**caractérisée en ce que**
un angle d'introduction (α) est défini comme la rotation allant du plus long diamètre de section transversale de l'élément de blocage (30) ovale à la direction tangentielle d'une fente (22) entre la zone de blocage (12) et la section de blocage (42) et la butée de direction est conçue pour introduire l'élément de blocage (30) pour la production de l'action de blocage dans la fente avec un angle d'introduction (α) d'au moins 3° et de préférence d'au moins 6°.

8. Butée de direction selon l'une des revendications précédentes,
**caractérisée en ce que**
l'élément de blocage (30) est conçu pour créer dans l'élément de blocage (30), à partir d'un couple de l'arbre de direction (11) lors d'un blocage de la rotation, des forces radiales qui correspondent à un moment d'arrêt qui est supérieur au couple déclencheur sur l'arbre de direction (30).

9. Butée de direction selon l'une des revendications précédentes,
**caractérisée en ce que**
une pluralité d'éléments de blocage (30) agencés autour de l'arbre de direction (11) peuvent être introduits en même temps dans la fente (22).

10. Procédé de fonctionnement d'une butée de direction selon l'une des revendications 1 à 9,
**caractérisé en ce que**
la position en rotation de l'arbre de direction (11) est mesurée en continu ou de manière répétée à de brefs intervalles et un élément de blocage (30) est alors introduit dans une fente (22) entre l'arbre de direction (11) et un support de blocage (40) ou des éléments couplés à celui-ci lorsque la position en rotation a atteint une valeur maximale autorisée prescrite et dans lequel la butée de direction est actionnée par l'intermédiaire de forces de frottement.

11. Procédé selon la revendication 10,
**caractérisé en ce que**
le couple appliqué par le conducteur sur l'arbre de direction (11) et/ou l'angle de rotation de l'arbre de direction (11) à des instants auxquels l'élément de blocage (30) est introduit dans la fente (22) sont mesurés en continu ou à des intervalles de temps prédéterminés et, en présence d'un angle de rotation de l'arbre de direction (11) qui est réduit par rapport à une valeur maximale et/ou en présence d'un couple qui agit en direction de la réduction de l'angle de rotation de l'arbre de direction (11), une force de traction est exercée sur l'élément de blocage (30) pour tirer l'élément de blocage (30) hors de la fente (22).
